# EUROPÄISCHE PATENTSCHRIFT

(11) **EP 0 806 358 B1**
(45) Veröffentlichungstag und Bekanntmachung des Hinweises auf die Patenterteilung: **18.08.1999**
(21) Anmeldenummer: 97107588.2
(22) Anmeldetag: 07.05.1997
(51) Int. Cl.: B65B 35/26, B65B 35/20, B65B 35/40, B65G 29/00, B65G 47/82, B65G 47/84

(54) **Verfahren und Vorrichtung zur Weitergabe von Gegenständen**
Method and device for transferring articles
Méthode et dispositif de transfert d'articles

(30) Priorität: 08.05.1996 DE 19618511
(43) Veröffentlichungstag der Anmeldung: 12.11.1997
(73) Patentinhaber: Pactec Verpackungsmaschinen-FabrikTheegarten GmbH & Co. KG, 01237 Dresden (DE)
(72) Erfinder: Kmoch, Werner, 01237 Dresden (DE); Girndt, Wolfgang, 01705 Freital (DE)
(74) Vertreter: Grünecker, Kinkeldey, Stockmair & SchwanhäusserAnwaltssozietät

(56) Entgegenhaltungen:
- EP-A- 0 538 765
- EP-A- 0 608 824
- DE-A- 2 335 026
- DE-A- 3 915 888
- DE-A- 4 041 652
- US-A- 2 651 442

## Beschreibung

Die Erfindung betrifft ein Verfahren zur Weitergabe von Gegenständen, bei dem die Gegenstände einzeln zugeführt und in Gruppen abgeführt werden. Die Erfindung betrifft ferner eine Vorrichtung mit den Merkmalen des Oberbegriffs von Patentanspruch 11.

Für die Verpackung lJeinstuεkiger Gegenstände, z.B. von Süßwaren wie Bonbons, (z.B. Weich-oder Hartkaramellen) ist es bekannt, z.B. zum Einzelverpacken der Gegenstände, diese auf der Grundlage eines Rotations- Transportprinzipes durch die Verpakkungsmaschine zu bewegen. Hierbei werden z.B. von einem Massestrang abgetrennte Bonbons zunächst von einem Greiferrad ergriffen und unter Rotation desselben an ein mit gleichem Wirkumfang versehenes Übergaberad übergeben, das seinerseits unter Geschwindigkeitsausgleich die Gegenstände an ein Einwickelrad weitergibt (WO-A-93/10005).

Derartige, auf dem "Rotationsprinzip" der Übergabeorgane aufgebaute Verpackungsmaschinen, insbesondere Bonbonsverpackungsmaschinen, können im Hochleistungsbereich mit Verpackungsgeschwindigkeiten von bis zu ca. 1.500 Stück pro Minute arbeiten und sind außerordentlich effizient. Schwierigkeiten bereitet bei derartigen Hochleistungs-Verpakkungsmaschinen die gleichermaßen wirtschaftliche weitere Prozeßgestaltung, z.B. zur Bildung von zu Stangen abgepackten Gegenständen.

Ein Verfahren und eine Vorrichtung der eingangs genannten Art sind aus der DE-A1-23 35 026 bekannt. Jedoch werden dort mit Hilfe eines Greiferpaares mehrere Einzelpackungen auf einmal gegriffen und gebündelt, im gebündelten Zustand verpackt und anschließend in auf einem Förderband transportierte Umverpackungen abgelegt.

Ein weiteres Verpackungsverfahren, bei dem Gegenstände unmittelbar aufeinanderfolgend auf ein Förderband abgelegt werden, sowie eine entsprechende Vorrichtung hierfür, ist aus der EP-A1 -0 538 762 bekannt.

Der Erfindung liegt daher die Aufgabe zugrunde, ein Verfahren und eine Vorrichtung der eingangs genannten Art anzugeben, die es gestatten, Gegenstände, ggf. auch nach vorheriger Einzelverpakkung, mit hoher Arbeitsgeschwindigkeit zu Gruppen zusammenzuordnen und stapelbar zu machen, ggf. zu einer Erst- oder Weiterverpackung zu Stangen.

Im Hinblick auf das Verfahren wird die vorgenannte Aufgabe erfindungsgemäß gelöst durch ein die Merkmale des Patentanspruchs 1 umfassendes Verfahren. Das erfindungsgemäße Verfahren hat den Vorteil, daß es auf der Grundlage der im wesentlichen auf Kreissegmentabschnitten erfolgenden Förderung der Gegenstände, wie z.B. Bonbons, durch eine Verpakkungsmaschine möglich ist, unter Beibehaltung dieses den Hochleistungsbetrieb ermöglichenden Arbeitsweise auch einzelne Gegenstände zu Gruppen zusammen zu ordnen, zur Vorbereitung einer Stangenbildung, in der die Gegenstände einzeln aneinanderliegend, verpackt oder unverpackt, enthalten sind.

Nach einer bevorzugten Ausführungsform der Erfindung sind die an dem rotierenden Träger angeordneten Haltebacken für die Gegenstände um eine im wesentlichen parallel zur Drehachse des Trägers verlaufende Achse schwenkbar, wobei diese relative Schwenkbewegung der Haltebackenpaare zur Grund-Rotationsbewegung des Trägers in vorteilhafter Weise eine Geschwindigkeitsanpassung zwischen dem Träger und dem nachgeordneten Stapelbandförderer erlaubt, wobei das Geschwindigkeitsverhältnis in weitem Rahmen variabel ist.

Vorzugsweise ist die Umlaufgeschwindigkeit des Trägers größer als eine Fördergeschwindigkeit, insbesondere Umlaufgeschwindigkeit, eines Stapelbandes des Stapelbandförderers.

Nach einer weiteren bevorzugten Ausgestaltung des erfindungsgemäßen Verfahrens wird jede Gruppe von in dem Stapelbandförderer gruppierten Gegenständen durch eine im wesentlichen rechtwinklig zur Förderrichtung des Stapelbandförderers arbeitende Ausstoßvorrichtung in einem Abgabebereich aus dem Stapelbandförderer abgegeben, wobei vorzugsweise ein Druckförderprinzip angewandt wird. Dabei wird vorzugsweise die Gruppe von Gegenständen auf eine im wesentlichen parallel zur Förderrichtung des Stapelbandförderers bewegbare Zwischenlagervorrichtung abgegeben, von der ihrerseits unter Anwendung eines Zugförderprinzips die Gegenstände gemeinsam von der Zwischenlagervorrichtung auf ein Zuführungsorgan einer Verarbeitungsmaschine, insbesondere Verpakkungsmaschine, wie z.B. einem Stangenpacker gefördert werden.

Weitere, bevorzugte Ausgestaltungen des erfindungsgemäßen Verfahrens, insbesondere in bezug auf die Aufnahme der Gegenstände durch die an dem Träger schwenkbar gelagerten Haltebacken sowie auf die Abstimmung der Fördergeschwindigkeiten der einzelnen Transportorgane sind in den übrigen Unteransprüchen dargelegt.

Hinsichtlich der Vorrichtung wird die vorgenannte Aufgabe durch eine Vorrichtung mit den Merkmalen des Patentanspruches 11 gelöst.

Die vorgenannte Vorrichtung ist besonders vorteilhaft, da sie unter Beibehaltung einer Einzelbehandlung von Gegenständen in einer Verpackungsmaschine und unter Beibehaltung des Prinzips einer "rotierenden" Weitergabe die Möglichkeit schafft, eine Mehrzahl von Gegenständen mit außerordentlich hohen Arbeitsgeschwindigkeiten in Gruppen zusammenzuordnen und einer weiteren Behandlung, z.B. zur Bildung von Stangen aus einer Vielzahl einzelner, vorgruppierter Gegenstände, verpackt oder unverpackt, zu unterziehen.

Nach einer bevorzugten Weiterbildung der erfindungsgemäßen Vorrichtung weist der Stapelbandförderer ein umlaufendes Stapelband mit einer Mehrzahl von Vorsprüngen auf, zur Bildung der Packfächer mit einem stationär gegenüberliegend zwischen einem Aufnahmeabschnitt des Stapelbandförderers und einem Abgabeabschnitt desselben angeordneten Gegenlager. Durch eine Schienenausbildung des Gegenlagers, ggf. auch einer Mehrzahl beabstandeter Schienen durch die auch Weiterförderorgane von unten her eingreifen könnten (in Abhängigkeit von der Konfiguration des Stapelbandförderers) ist es möglich, die Gegenstände gruppenweise mit geringen Reibungsbeiwerten weiterzutransportieren, so daß insgesamt eine schonende Behandlung der Gegenstände, die vorzugsweise bereits einzelverpackt sind, ermöglicht ist.

Für eine, die Beibehaltung einer hohen Arbeitsgeschwindigkeit (unter Berücksichtigung des erforderlichen Geschwindigkeitsgefälles zwischen dem Träger und dem Stapelbandförderer) ist es vorteilhaft, daß die Bildung der Packfächer im wesentlichen tangential zu dem Bewegungsweg der Haltebackenpaare an dem Träger erfolgt.

Nach noch einer bevorzugten Ausführungsform der Erfindung weisen die Haltebackenpaare des Trägers ihrerseits bewegliche Haltebacken auf, zwischen denen der betreffende Gegenstand jeweils direkt aufgenommen und abgestützt ist, wobei die Haltebakken separat von zugehörigen, die Haltebacken lagernden Schwenkgehäusen beweglich und insbesondere gegenüber diesen verdrehbar sind, so daß es möglich ist, die von den Haltebacken erfaßten Gegenstände auf dem Wege zwischen dem Aufnahmebereich des Trägers und dem Abgabebereich desselben an den Stapelbandförderer z.B. um 90° zu drehen. Hierdurch können z.B. prismatische Gegenstände in flacher Orientierung zunächst durch die Haltebacken erfaßt, jedoch in einer Hochkant-Orientierung zur Gruppenbildung und Abstapelung an den Stapelbandförderer weitergegeben werden (oder vice versa).

Nach noch eine weiteren, bevorzugten Ausgestaltung der erfindungsgemäßen Vorrichtung ist in einem Abgabebereich des Stapelbandförderers eine Querschubvorrichtung als Ausstoßvorrichtung zum Ausschieben der gruppenweise geförderten Gegenstände aus den Packfächern des Stapelbandförderers vorgesehen.

Durch diese Ausstoßvorrichtung erfolgt eine gruppenweise Querverlagerung der Gegenstände zur Weiterverpackung. In Abhängigkeit von einem Steuersignal an die Querschubvorrichtung kann diese auch bei Feststellung nicht-qualitätsgrechten Gegenständen stillgesetzt werden, so daß eine als unvollständig oder als zumindest teilweise qualitativ unzureichend erkannte Stufe in Förderrichtung des Stapelbandförderers abgefördert wird.

Vorzugsweise ist in Verbindung mit der Schiebervorrichtung eine Zwischenlagervorrichtung, insbesondere Zwischenplatte, vorgesehen, die parallel zur Förderrichtung, die das Stapelband im Ausgabebereich des Stapelbandförderers einnimmt, bewegbar ist.

Zur Verwendung mit einem Stangenpacker kann vorzugsweise stromab der Zwischenlagervorrichtung, insbesondere Zwischenplatte, ein Zuführband zur gruppenweisen Zuführung der Gegenstände zu einer Verpackungsmaschine, insbesondere einen Stangenpacker vorgesehen und eine Übergabevorrichtung zum gleichzeitigen Zufördern einer oder einer Mehrzahl von in der Zwischenlagervorrichtung befindlichen Gruppen von Gegenständen zu dem Zuführband vorgesehen sein.

[0021 ] Vorzugsweise ist der rotierende Träger ein zwischen einem rotierenden Packkopf und dem Stapelbandförderer angeordneter Übergabekopf, der ein um eine stationäre Achse rotierendes Gehäuse, an dem schwenkbar eine Mehrzahl von Haltebackenpaare aufgenommen ist, aufweist, wobei eine Schwenksteuerung der Haltebackenpaare sowie eine separate Drehbewegung der Haltebacken durch eine stationäre, gemeinsam mit der Achse verstellbare Kurvenscheibenanordnung erfolgt.

Weitere, bevorzugte Ausgestaltungen der erfindungsgemäßen Vorrichtung sind in den übrigen Unteransprüchen dargelegt.

Die Erfindung wird nachstehend anhand eines Ausführungsbeispieles und zugehöriger Zeichnungen näher erläutert. In diesen zeigen:
Fig. 1 eine Vorrichtung zur Weitergabe von Gegenständen nach einem Ausführungsbeispiel der Erfindung, wobei einzelne Gegenstände, hier Bonbons, zunächst einzelverpackt, anschließend eine Gruppenbildung der einzelverpackten Bonbons erfolgt und schließlich die Gruppen einem Zuführungsförderer für einen Stangenpacker zugeführt werden und für Flachpackung,
Fig. 2 eine schematische Darstellung der Weitergabevorrichtung nach Fig. 1 im Bereich einer Zuförderung der einzelverpackten Gegenstände zu einem Stapelbandförderer über einen Übergabekopf von einem Packkopf unter 90°-Drehung der Gegenstände durch den Übergabekopf, abweichend von dem Ausführungsbeispiel nach Fig. 1 (Hochkantpackung),
Fig. 3 einen Längsschnitt durch einen Übergabekopf in einer Bonbon-Verpackungsmaschine,
Fig. 4 eine Teilschnitt-Darstellung entlang einer Linie A-A nach Fig.1,
Fig. 5 eine Teilschnitt-Darstellung entlang einer Linie B-B nach Fig. 1,
Fig. 6 eine Teilschnitt-Darstellung entlang einer Linie C-C nach Fig.1,
Fig. 7 eine Teilschnitt-Darstellung entlang einer Linie D-D nach Fig. 1,
Fig. 8 eine Teilschnitt-Darstellung entlang einer Linie E-E nach Fig.1,
Fig. 9 eine Teilschnitt-Darstellung entlang einer Linie F-F nach Fig. 1,
Fig. 10 eine Teilschnitt-Darstellung entlang einer Linie G-G nach Fig.1,
Fig. 11 eine Ansicht ähnlich derjenigen in Fig. 2 für eine einzelne Haltebacke (äußere Axialansicht), und
Fig. 12 eine schematische Darstellung für den Bewegungsablauf bei der Bildung der Gruppierung an der Übergabestelle zwischen Übergabekopf und Stapelbandförderer für die Herstellung von Hochkantpackungen (Fig. 12a) und Flachpackungen (Fig. 12b),
Fig. 13 eine Draufsicht auf eine Übergabevorrichtung für die Weitergabevorrichtung nach Fig. 1,
Fig. 14a - 14c eine Darstellung der Phasen einer Ausförderung einer Gruppe von Gegenständen aus einem Stapelbandförderer nach einer Ausführungsform gemäß Fig. 2 (Hochkantpackung) bzw. Fig. 12a zu einer Weiterfördereinrichtung, und
Fig. 15 eine Querschnittsdarstellung der Übergabevorrichtung nach Fig. 14 in schematischer Darstellung.

Ein bevorzugtes Ausführungsbeispiel des Verfahrens und der Vorrichtung zur Weitergabe von Gegenständen wird nachfolgend erläutert.

Das Ausführungsbeispiel, das die Verpackung von Bonbons 205 von prismatischer Geometrie, z.B. von Weich- oder Hartkaramellen darstellt, insbesondere unter Vorbereitung der einzelverpackten Bonbons 205 für die Zuführung zu einem - hier nicht dargestellten - Stangenpacker, ist selbstverständlich nicht auf die Handhabung dieser Art von Gegenständen beschränkt, sondern kann für eine Vielzahl anderer, insbesondere kleinstückiger Gegenstände, die verpackt werden sollen und die insbesondere entweder bereits einzeln vorverpackt oder auch unverpackt zu Gruppen versammelt und insbesondere zu Stangen verpackt werden sollen, Anwendung finden. Darüberhinaus können einzelne Elemente der Gesamtvorrichtung, wie z.B. ein Übergabekopf, auch in anderen Zusammenhängen und Maschinenverknüpfungen eingesetzt werden.

In derartigen Verpackungsmaschinen können einzelne, z.B. von einem kontinuierlichen Massestrang abgetrennte Bonbonstücke nach Aufnahme und Zuförderung über ein hier nicht dargestelltes Greiferad und Übergaberad (wie dies aus der WO 93/25440 bekannt ist), zu einem umlaufenden Packkopf 2 gefördert, der hinsichtlich seiner Bewegungsmechanik mit einem ähnlichen Grundaufbau wie der Übergabekopf 1 versehen ein um eine stationäre Achse 201 rotierendes Gehäuse 202 aufweist, an dem um Drehachsen 203 schwenkbar jeweils ein Packbackenpaar 204 gelagert ist, das das Bonbonstück aufnimmt und unter Zuführung eines Packmaterialabschnittes das Bonbonstück zu dem einzelverpackten Bonbon 205 verpackt, ohne daß dies hier im einzelnen dargestellt wäre.

Vielfach besteht der Wunsch, derartige, einzelverpackte Kleinartikel, wie die Bonbons 205 anschließend in Stangen abzupacken, wie dies auch für Weichkaramellen oder andere Süßigkeiten (z.B. Kaugummis) bekannt ist. Hierzu ist es erforderlich, die Einzelstücke der einzeln verpackten Bonbons 205 zu Gruppen zusamnmenzuordnen, um sie sodann einem (hier ebenfalls hier nicht dargestellten) Stangenpacker zuzuführen. Hierzu ist der Übergabekopf 1 nach dem vorliegenden Ausführungsbeispiel vorgesehen, der, stromab des Packkopfes 2 und stromauf eines Stapelbandförderers 3 angeordnet, ebenfalls ein um eine stationäre Achse 101 rotierendes Gehäuse 102 aufweist, an dem um Drehachsen 103 schwenkbar gelagert Haltebackenpaare 104 schwenkbar gelagert sind, die 90° gedreht in Bezug auf die Orientierung der Packbackenpaare 204 des Packkopfes 2 angeordnet zur Aufnahme der einzelverpackten Bonbons 205 von dem mit gleicher Umlaufgeschwindigkeit, jedoch mit entgegengesetztem Drehsinn umlaufenden Packkopf 2 und zur Abgabe an einen Stapelbandförderer 3 vorgesehen sind, der mit wesentlich geringerer Fördergeschwindgkeit (ca. 1/3 der Umlaufgeschwindigkeit des rotierenden Gehäuses 102 des Übergabekopfes 1 die einzelverpackten Bonbons gruppenweise zusammenordnet. Für ein reibungsloses Arbeiten ist eine Anpassung der Umlaufgeschwindigkeit des jeweiligen Haltebackenpaares mit dem einzelverpackten Bonbon 205 an die Fördergeschwindigkeit des gruppenbildenden Stapelbandförderers 3 erforderlich, wobei dies durch Schwenkgehäuse 117, d.h. durch die um die Drehachse 103 schwenkbare Anlenkung der Haltebackenpaare 104 erfolgt. Zur Bildung der Gruppen weist der Stapelbandförderer 3 ein Stapelband 301 mit Mitnehmern 302 auf, wobei das Stapelband über eine Umlenkwalze 303 geführt wird und im Bereich der Aufnahme der Bonbons 205 von dem Übergabekopf 1 sowie zum Weitertransport der Bonbon-Gruppen ein Gegenlager 304 aufweist.

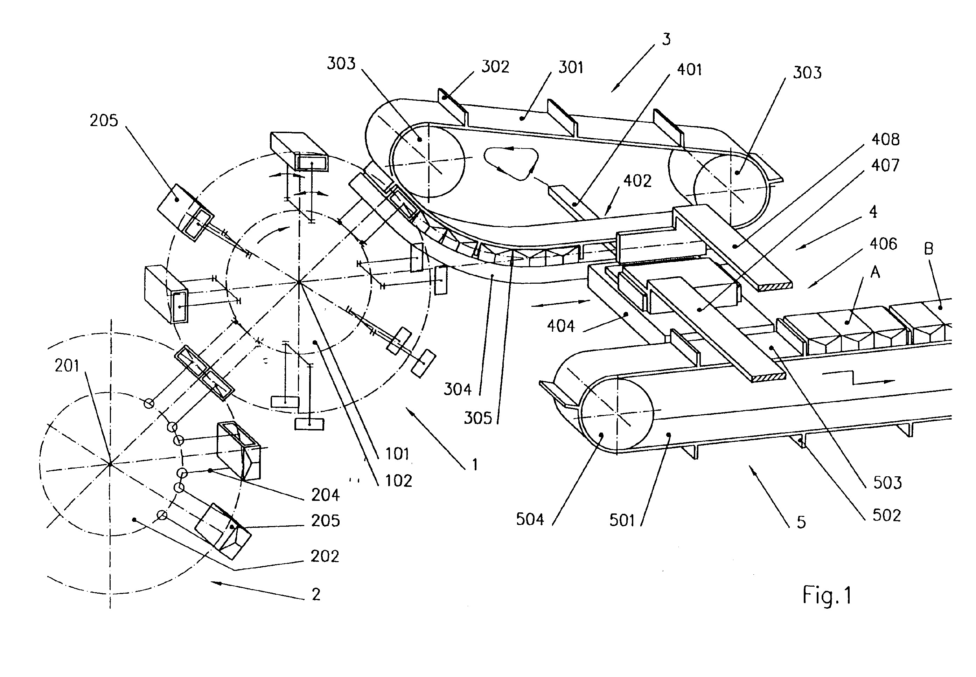

Wie Fig. 1 zeigt, werden somit von dem Packkopf 2, der eine Viehlzahl von um die stationäre Achse 201 an dem rotierenden Gehäuse 202 schwenkbarer Packbackenpaare 204 aufweist, die einzelverpackten Bonbons 205 dem stromauf des Stapelbandförderers 3 angeordneten Übergabekopf 1 zugeführt, der die Bonbons 205 durch die Haltebackenpaare 104, die schwenkbar an dem um die stationäre Achse 101 rotierenden Gehäuse 102 gelagert sind, aufnimmt und zu dem Stapelbandförderer 3 führt, der tangential in der Umlaufbahn der Bonbons 205 angeordnet ist.

Der Übergabekopf 1 besitzt zugleich die Fähigkeit, die Bonbons in ihrer Lage um 90° zu drehen, so daß sie nicht nur im Flachformat (wie aufgenommen) weitergegeben werden können, sondern auch für eine Hochkantweiterverarbeitung dem Stapelbandförderer 3 zugeführt werden können.

Während der Übergabekopf 1 und der Packkopf 2 im wesentlichen mit einer gleichen z.B. 1.500 Bonbons pro Minute behandelnden Rotationsgeschwindigkeit umlaufen, weist der Stapelbandförderer 3 eine deutliche geringere Arbeitsgeschwindigkeit auf, die vorzugsweise bei maximal ca. 50% der Arbeitsgeschwindigkeit der vorgeschalteten Förderer 1 und 2 liegt (im allgemeinen 1/3 dieser Arbeitsgeschwindigkeit beträgt), und der Bildung Gruppen A, B von Bonbons 205 dient, zur Weiterverpackung zu Stangen.

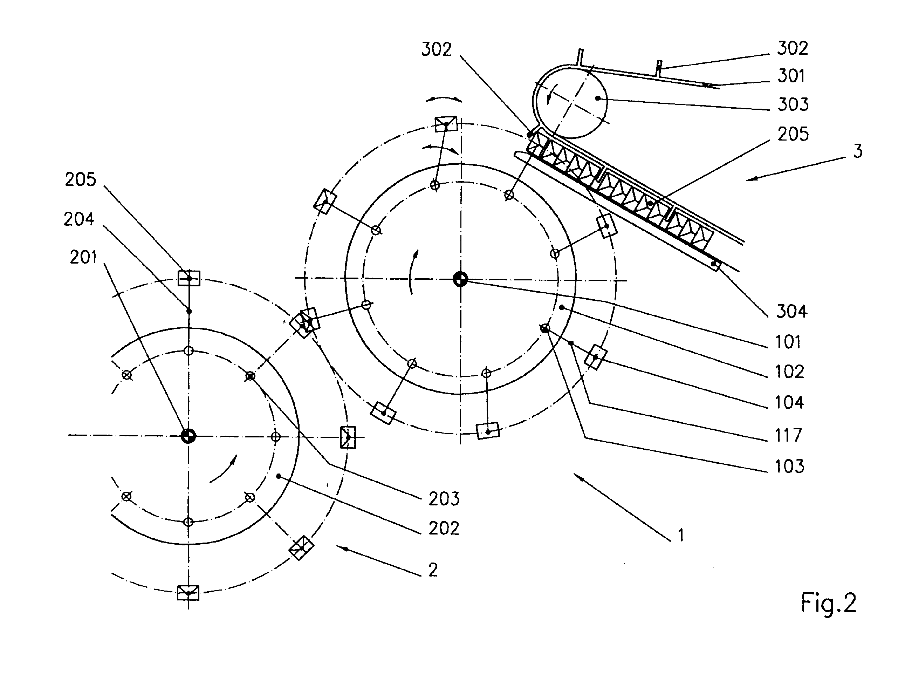

[0031 ] Zu diesem Zweck weist der Stapelbandförderer 3 das Stapelband 301 mit den Mitnehmern 302 auf, die in Verbindung mit dem Gegenlager 304 Packfächer 305 bilden, in denen im vorliegenden Fall jeweils 3 Bonbons 205 nebeneinanderliegend aufgenommen werden können (Fig. 1) oder jeweils 5 Bonbons 205 hochkant nebeneinanderliegend aufgenommen werden können (Fig. 2, Fig. 13-15). Das Stapelband 301 wird über die Umlenkwalzen 303 kontinuierlich umlaufend geführt.

Zur Bereitstellung der zu Gruppen zusammengefaßten Bonbons 205, die bereits einzelverpackt sind, an eine Weiterfördereinrichtung 5, die hier durch ein Zuführband 501 gebildet wird, das ähnlich wie das Stapelband 301 durch Mitnehmer 502 einzelne Transportfächer 503 bildet, in denen die zugeführten Gruppen A, B von Bonbons intermittierend abgefördert und z.B. einem Stangenpacker zugeführt werden.

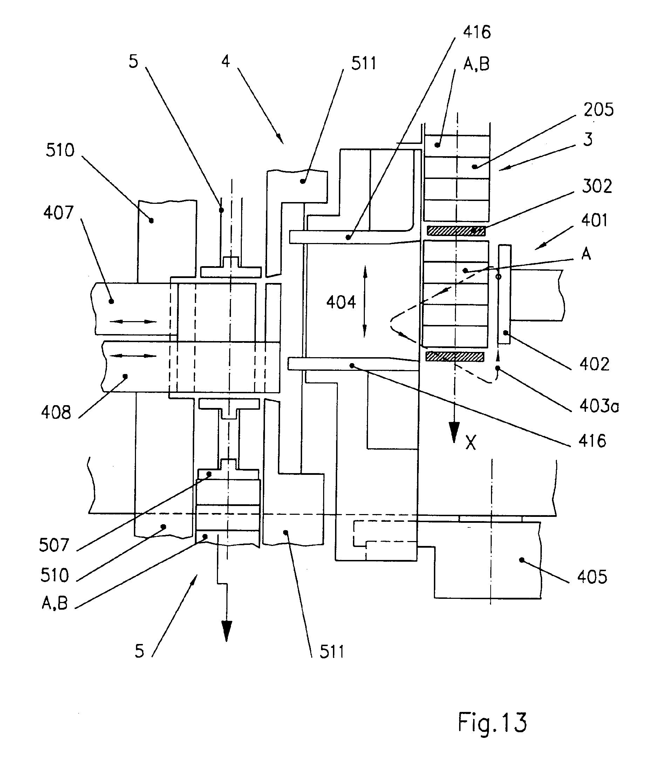

In der schematischen Darstellung nach Fig. 1 ist die Weiterfördereinrichtung 5 als Zuführband 501, umgelenkt um die Umlenkwalze 504, ausgeführt. Im Hinblick auf Stangenpacker wird vielfach jedoch bevorzugt, die Gruppen A, B von Bonbons 205 einer Zuführkette 505 als Weiterfördereinrichtung und Zuführbahn für eine anschließende Verpackung mehrerer Gruppen A, B von Gegenständen zuzuführen, wie dies in Fig. 13 - 15 dargestellt ist.

Zur gruppenweisen Bereitstellung der Bonbons 205 (in Fig. 1 Dreiergruppen, in Fig. 2 sowie Fig. 13 - 15 in Fünfergruppen hochkant) und zur Weiterförderung zu dem Zuführband 501 (Fig. 1) bzw. der Zuführkette 505 (Fig. 13 - 15) ist eine Übergabevorrichtung 4 vorgesehen, die im Sinne einer Querförderung zwischen dem Stapelbandförderer 3 und der Weiterfördereinrichtung 5 arbeitet und die weiter unten genauer erläutert wird.

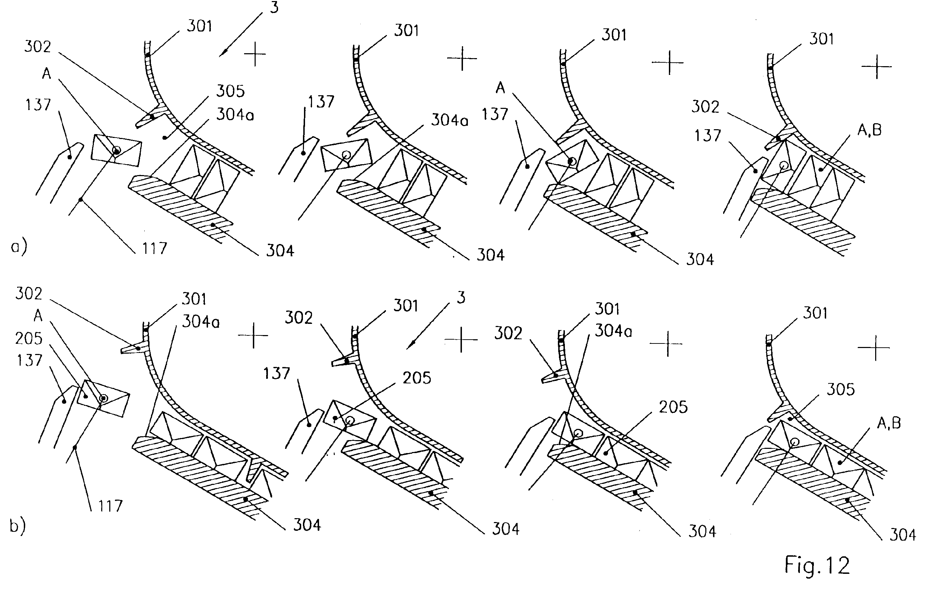

In dem Ausführungsbeispiel gem. Fig. 1 werden die Bonbons 205 zur Herstellung von Flachpackungen in der gleichen Orientierung wie von dem Packkopf 2 aufgenommen, d.h. ohne Rotation an den Stapelbandförderer 3 übergeben, wie dies auch bei der diesem Ausführungsbeispiel entsprechenden Darstellung des Übergabevorganges gem. Fig. 12b der Fall ist.

In vielen Fällen ist es jedoch wünschenswert, die Weiterverpackung mit um ca. 90° gedrehten Artikeln, bei prismatischen Gegenständen, z.B. im Hochkantformat zur Bildung von Hochkantpackungen (Stangen) oder für eine sonstige Weiterverarbeitung, vorzunehmen (s. Fig. 12a).

Der Übergabekopf 1 ist daher in spezieller Weise zur Gewährleistung einer solchen Funktion ausgebildet, wie dies nachstehend anhand der Fig. 2 - 11 erläutert ist.

Eine Verfahrensführung mit um 90° gedrehter Weitergabe der Bonbons 205 an den Stapelbandförderer 3 zeigt Fig. 2.

Eine wesentliche Voraussetzung für die Gruppenbildung der einzelverpackten Bonbons 205 am Stapelbandförderer 3 ist daher in diesem Ausführungsbeispiel die mit der jeweiligen Schmalseite der verpackten Bonbons 205 nach oben zum Stapelband 301 bzw. zum Gegenlager 304 gerichtete Aufnahme, die durch den Übergabekopf 1 gewährleistet werden muß, wobei die einzelverpackten Bonbons 205 zunächst in einer hierzu um 90° versetzten Flachlage von dem Packkopf 2 übernommen werden.

Auf dem Wege von der Aufnahme der Bonbons 205 von dem Packkopf 2 durch die Haltebackenpaare 104 des Übergabekopfes 1 bis zur Abgabe an den Stapelbandförderer 3 müssen die Bonbons 205 daher noch um 90° bei gleichzeitiger Erfassung durch die Haltebakkenpaare 104 gedreht werden. Vorzugsweise erfolgt diese Rotationsbewegung erst am Ende, d.h. gemeinsam mit einer opponierenden Axialbewegung der Haltebackenpaare 104 zur Freigabe des Bonbons 205 an das Stapelband 301 des Stapelbandförderes 3, so daß die Haltebackenpaare 104 nicht nur einer Axialbewegung unterliegen, sondern diese zugleich von einer Drehbewegung der Haltebackenpaare 104 überlagert wird, zur Rotation der Bonbons 205 in die Hochkantposition.

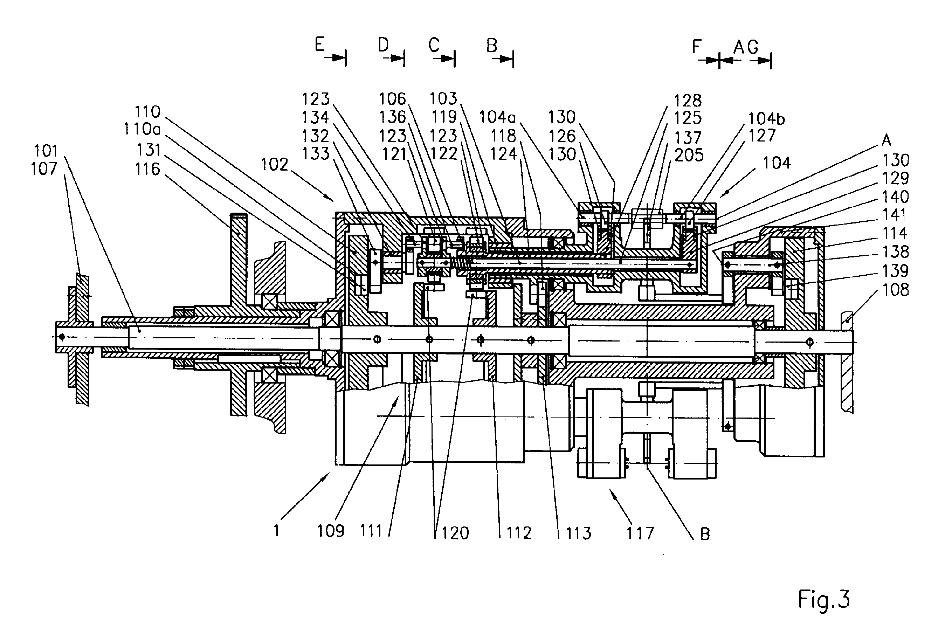

[0041 ] Nachstehend wird der konstruktive Aufbau des Übergabekopfes 1 mit der Einrichtung zur Rotation der Haltebackenpaare 104 anhand der Fig. 3 - 11 genauer erläutert.

Der Übergabekopf 1 weist die zentrale, stationäre, gleichwohl in Umfangsrichtung insbesondere um 180° verdrehbare Achse 101 auf, die sich zwischen einem stationären Gehäuse 107 und einer Lagerplatte 108 erstreckt. Auf der stationären Achse 101 ist, drehfest mit der Achse 101 verbunden, eine Steuerkurvenanordnung 109 als Teil einer Bewegungssteuereinrichtung für die Haltebackenpaare 104 fixiert. Diese Steuerkurvenanordnung 109 besteht aus einer Mehrzahl von auf der stationären Achse 101 abfolgend angeordneten Kurvenscheiben 110, 111, 112, 113, 114. Sie sind gemeinsam mit der stationären Achse 106 vorzugsweise um ein 180° schwenkbar, um eine Änderung des Bewegungsmusters für eine Drehbewegung der einzelnen Haltebackenpaare 104 einzurichten, wie nachfolgend noch erläutert werden wird.

Alternativ könnten die Kurvenscheiben 110 - 114 auch baulich vereinigt oder aber separat über z. B. eine gemeinsame Stellhülse, die drehbar auf der stationären Achse 106 aufgenommen ist, gegenüber dieser um einen bestimmten Winkel einstellbar sein.

Auf der stationären Achse 101 ist zur Rotation ein Grundgehäuse 102 drehbar gelagert, das über ein Antriebsstirnrad 116 angetrieben wird, wobei die Antriebsvorrichtung hier nicht im einzelnen dargestellt ist.

Durch in Umfangsrichtung abfolgend in dem Grundgehäuse 102 drehbar gelagerte Wellen 125 für jedes Haltebackenpaar 104 werden die Drehachsen 103 für die Haltebackenpaare 104 bestimmt, die in den um diese Drehachsen 103 schwenkbaren Schwenkgehäusen 117 aufgenommen sind. Die Schwenkbewegung der Schwenkgehäuse 117 zur Anpassung der Übergabegeschwindigkeit von der Umfangsgeschwindigkeit des Übergabekopfes 1 zu der ca. 1/3 dieser Umfangsgeschwindigkeit betragenden Fördergeschwindigkeit des Stapelbandes 301 erfolgt über die Doppel-Kurvenscheibe 113 mit der über Steuerrollenpaare 118 die am Umfang der Doppel-Kurvenscheibe 113 abrollen (s. Schnitt B-B gem. Fig. 3) und die Steuerbewegung auf einen rohrförmigen Gehäuseansatz 119 des Schwenkgehäuses 117 überträgt.

In einem nach außen radial vorspringenden Teil des gabelförmigen Schwenkgehäuses 117 ist opponierend jeweils ein Haltebackenpaar 104 mit den Haltebacken 104a, 104b gelagert, wobei jede Haltebacke 104a, 104b axial beweglich ist, um das Bonbon 205 an gegenüberliegenden Flächen andrückend unter Kraftschluß und Verspannung durch eine Feder 106 zu ergreifen oder freizugeben.

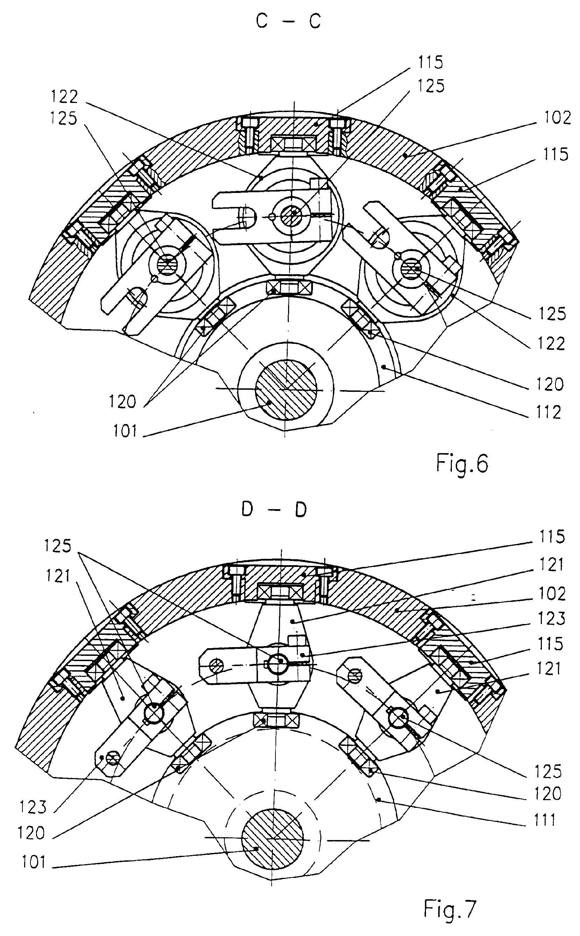

Zusätzlich sind die Haltebacken 104a, 104b aber auch um eine Haltebackenachse A drehbar, um das ergriffene Bonbon 205 (oder einen anderen Gegenstand, der gerade verarbeitet wird) in einer gegenüber der Aufnahmeposition vorzugsweise um 90° gedrehten Position (z.B. hochkant nach Flachaufnahme) weiterzugeben. Die Bewegungssteuereinrichtung für jedes Haltebackenpaar 104, die den Haltebacken 104a, 104b sowohl eine opponierende Axialbewegung als auch eine Drehbewegung um ihre Haltebackenachse A verleiht, weist die Kurvenscheiben 110, 111, 112 auf, wobei die Kurvenscheiben 111 und 112 die Axialbewegung der äußeren Haltebacke 104b (Kurvenscheibe 111) bzw. die Axialbewegung der inneren Haltebacke 104a (Kurvenscheibe 112) steuern. Erläuternd wird hierzu auch auf die zusätzlichen Schnittdarstellungen C-C, D-D, E-E gemäß den Fig. 6, 7 und 8 verwiesen. Mit den Kurvenscheiben 111, 112, die jeweils als Stirnkurven (äußerer Lagerring) ausgebildet sind, ist hierzu jeweils eine Steuerrolle 120 eines Kurvenhebels 121, 122 in Eingriff, wobei der Kurvenhebel 121 mit radialen Führungskörpern 123, die drehfest mit der Welle 125 verbunden sind, umgeben ist, um einerseits die Übertragung der von der Steuerrolle 120 aufgenommenen Axialbewegung auf die Welle 125 und andererseits auch die Übertragung einer Schwenkbewegung auf diese Welle 125 zu gestatten, wobei der Kurvenhebel 121 selbst drehbar auf der Welle 125 und über ein Einsatzstück 115 auch drehbar (äußerer Lagerring) im Außenumfangsbereich des rotierenden Grundgehäuses 102 gelagert ist.

Die Steuerung der Axialbewegung für die innere Haltebacke 104a erfolgt über die Steuerrolle des ebenfalls durch radiale Führungskörper 123 radial geführten Kurvenhebels 122 auf die Hülse 124, mit der die radialen Führungskörper 123 drehfest verbunden sind, wobei die Hülse 124 mit der inneren Haltebacke 104a zur Übertragung der Axialbewegung von der Hülse 124 auf diese Haltebacke 104a direkt verbunden ist. Auch der Kurvenhebel 122 ist mit seinem anderen Ende in Einsatzstücken 115 des Grundgehäuses 102 drehbar gelagert.

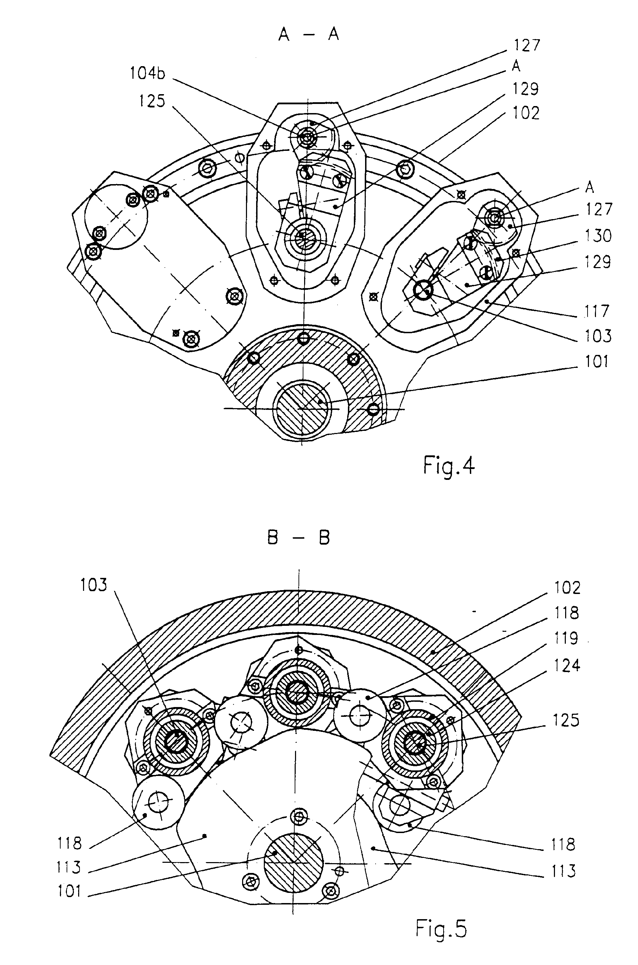

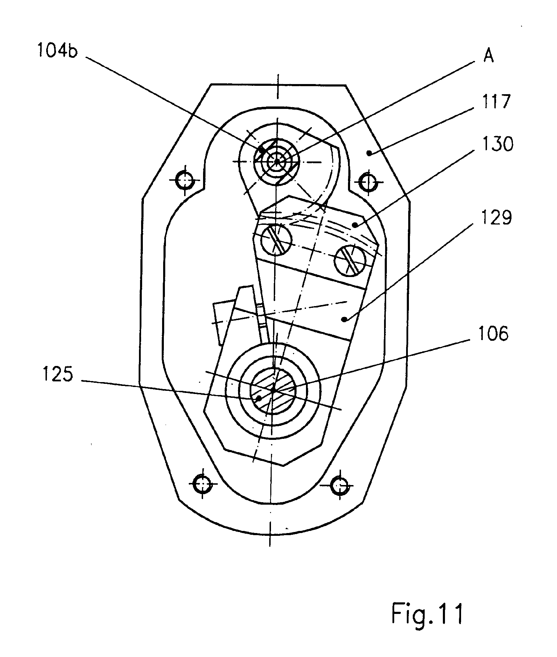

Um für die mit dem Schwenkgehäuse 117 um die Drehachse 103 in einer Taumel- oder Pendelbewegung (s. Fig. 2) verschwenkbaren Haltebackenpaare 104 auch noch zusätzlich mit einer Drehbewegung um die Haltebackenachse A auszurüsten, zur gegenüber einer Aufnahmeposition von dem vorgeschalteten Packkopf 1 z.B. um 90° verdrehten Abgabeposition für die Bonbons 205 ist jede Haltebacke 104a, 104b einstückig mit einem Zahnsegment 126, 127 versehen, das in Kämmeingriff mit Gegen-Zahnsegmenten 128, 129 ist, die einmal drehfest für die äußere Haltebacke 104b auf der Welle 125 bzw. für die innere Haltebacke 104a auf der Hülse 124 aufgenommen sind. Da diese Gegen-Zahnsegmente 128, 129 auch die opponierende Axialbewegung auf die Haltebacken 104a, 104b übertragen müssen, ist der Verzahnungseingriff zwischen den Zahnsegmenten 126, 127 und den Gegen-Zahnsegmenten 128, 129 zwischen Überdeckungsplatten 130, käfigartig eingefangen, die an den Gegen-Zahnsegmenten befestigt sind, wie dies insbesondere aus den Fig. 4 (Schnitt bei abgenommenen Schwenkgehäusedeckeln) und Fig. 11 deutlich ist.

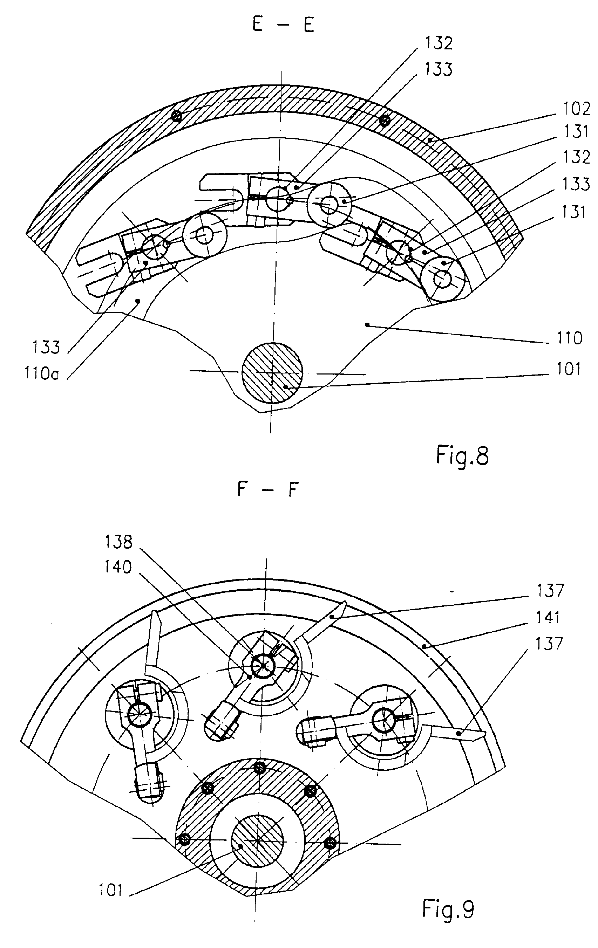

Zur Ableitung dieser Drehbewegung der einzelnen Haltebacken 104a, 104b um die Haltebackenachse A ist die Kurvenscheibe 110 vorgesehen, in deren Nutkurve 110a (Fig. 8) über eine Steuerrolle 131 ein bei 132 im Grundgehäuse 102 schwenkbar gelagerter Antriebshebel 133 angreift, dessen Drehbewegung über Hebelglieder 134 auf den Führungskörper 123 zur Schwenkbewegung der Welle 125 übertragen wird, während die gleiche Drehbewegung über den weiteren Führungskörper 123 und ein Koppelglied 136 auf die Hülse 124 und damit auf das Gegen-Zahnsegment 128 übertragen wird.

Die Teilschnitt-Darstellung nach Fig. 11 (bei abgenommenen Schwenkgehäuse-Deckel) verdeutlicht nochmals die den Haltebacken 104a, 104b des Übergabekopfes 1 zusätzlich verliehenen Freiheitsgrad und zeigt die Übertragungselemente für die Übertragung einer zusätzlichen Drehbewegung, hier auf die außenliegende Haltebacke 104b um die Haltebackenachse A, wobei ersichtlich ist, daß durch integrale Verbindung des Zahnsegmentes 127 mit der Haltebacke 104b dieser durch Kämmeingriff mit dem Gegen-Zahnsegment 129 eine Drehbewegung um die Haltebackenachse A verliehen werden kann, bei Verdrehung der Welle 125, mit der das Gegen-Zahnsegment 129 fest verbunden ist. Hierdurch ist die besondere Eignung des Übergabekopfes als Vorschaltglied zu einem Stapelbandförderer 3 begründet, da es möglich ist, wechselnden Anforderungen an die Orientierung des entsprechenden Artikels, hier Bonbons 205, zu entsprechen.

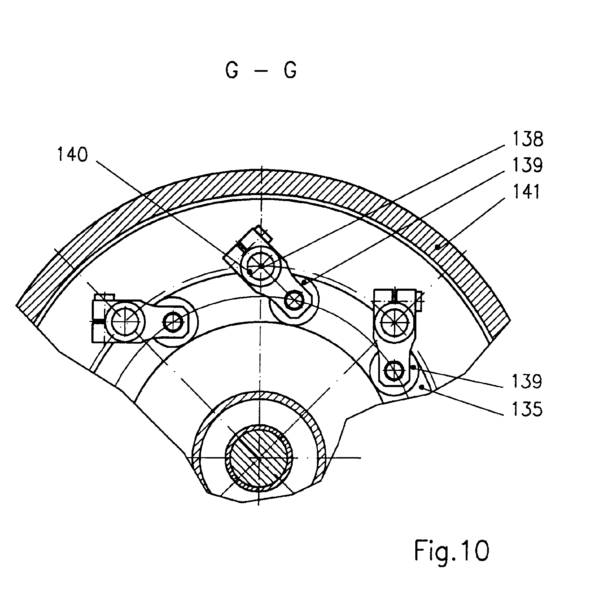

Zur Stabilisierung der Übertragung des entsprechenden Artikels, hier Bonbons 205, um dem Übergabekopf 1 zu dem Stapelbandförderer 3, insbesondere für ein sicheres Abgeben des Bonbons 205 von dem jeweiligen Haltebackenpaar 104 in den zwischen dem Stapelband 301 und dem Gegenlager 304 gebildeten Zwischenraum ist für jedes Schwenkgehäuse 117 ein Haltefinger 137 in einer mittleren Radialebene B zwischen beiden Haltebacken 104a, 104b, praktisch in Anlage oder unmittelbar benachbart zu dem jeweiligen Artikel, hier Bonbon 205, vorgesehen, der die zuverlässige Abstützung und Übergabe des Bonbons 205 von dem Übergabekopf 1 auf die Nachfolgeeinrichtung, hier das Stapelband 301 des Stapelbandförderers 3, unterstützt. Eine Drehachse 138 stimmt mit derjenigen Drehachse 103 für das zugehörige Schwenkgehäuse 117 überein, wobei die Synchronbewegung des Haltefingers 137 zu der Bewegung des Schwenkgehäuses 117 von der drehfest mit der stationären Achse 101 verbundenen Kurvenscheibe 114 über eine Nutkurve 135 und eine Steuerrolle 139 über entsprechende Übertragungsglieder 140, die drehbar in dem Haltefinger-Gehäuse 141 gelagert sind, erfolgt (s. Fig. 10). In die Schnittdarstellung F-F gem. Fig. 9 (Ansicht auf das Haltefinger-Gehäuse 141) ist zusätzlich jeweils der Haltefinger 137 eingezeichnet.

In den Fig. 11a und 11b ist schematisch das Übergeben der einzelverpackten Bonbons 205 von dem Übergabekopf 1 für ein Haltebackenpaar schematisch dargestellt, und zwar in Fig. 11a für die Bildung von Gruppen zur Hochkantpackung unter Rotation der Haltebacken 104a, 104b (wie vorstehend beschrieben) und in Fig. 11b zur Bildung von Gruppen in Flachpackung (keine zusätzliche Rotation der Haltebacken 104a, 104b), wobei insbesondere für Fig. 11a deutlich ist, daß die Drehbewegung der Haltebacken 104a, 104b um die Haltebackenachse A im Bereich der Übergabe an den Stapelbandförderer 3, d.h. unter Überlagerung der Schwenkbewegung, die die Haltebacken 104a, 104b mit dem Schwenkgehäuse 117 ausführen, erfolgt. Das Gegenlager 304 hat eine Einführungsschräge 304a und der Haltefinger 137 steht gegebenenfalls unterstützend für den Übergabeprozeß bereit.

Durch den Mitnehmer 302 wird die Gruppe A, B dann jeweils entlang des Gegenhalters in einem so gebildeten Packfach 305 weggefördert.

Auf diese Weise ist für kleinstückiges Gut ein rotierendes Transportmittel geschaffen, das im Hochleistungsbereich, z.B. für die Abförderung mit einer Geschwindigkeit von ca. 1.500 Stück pro Minute, bzw. ca. 500 Gruppen pro Minute, äußerst zuverlässig arbeiten und überdies auf seinem Transportweg, insbesondere bei gleichzeitiger Abgabe des transportierten Artikels eine Veränderung der Winkellage des Gegenstandes zwischen Erfassungsposition von einer stromaufliegenden Vorrichtung zu einer Abgabeposition an eine stromabliegende Vorrichtung gestattet.

Eine derartige Ausbildung ist nicht auf einen Übergabekopf als Aufgabeeinrichtung auf einen Stapelbandförderer, der einzeln verpackte Gegenstände zu Gruppen zusammenordnet, beschränkt, vielmehr können auf diese Weise auch bisher nicht verpackte Einzelgenstände transportiert werden und ein entsprechender Übergabekopf oder Greiferrad auch an anderen Stellen einer solchen, auf dem "Rotationsprinzip" beruhenden Verpackungsmaschinen eingesetzt werden.

Nachstehend wird anhand der Fig. 12 - 15 die Übergabe der Bonbons 205 von den Gruppen A, B bildenden Stapelbandförderer 3 zu der Weiterfördereinrichtung 5 (Zuführungskette zu Stangenpacker) genauer erläutert.

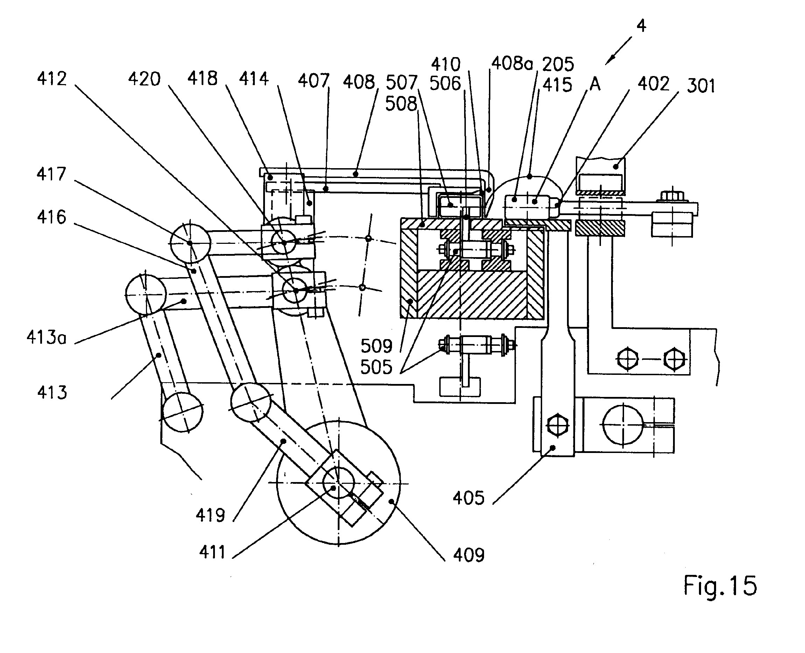

Die Übergabevorrichtung 4 weist eine Querschubvorrichtung 401 mit einem Ausschieber 402, dessen Breite in Förderrichtung des Stapelbandes 301 ca. der Gesamtbreite einer Gruppe A, B von Bonbons 205 entspricht, d.h. etwas geringer ist als der Abstand zwischen zwei abfolgenden Mitnehmern 302 des Stapelbandes 301, so daß der Ausschieber 402 in ein zwischen den Mitnehmern 302 und dem Gegenlager 304 gebildetes Packfach 305 eintauchen und gemeinsam die Gruppe A, B von Bonbons 205 in Querrichtung aus dem Stapelförderer 3 herausfördern kann (s. auch Fig. 13 und 15). Da das Stapelband 301 des Stapelbandförderers 3 kontinuierlich umläuft, muß der Ausschieber 402 eine entsprechend kombinierte, aus Ausstoßlängs- und - querbewegung zusammengesetzte Steuerbewegung ausführen, die vorzugsweise im Bereich vor bzw. nach dem Eintauchen auch mit Vertikalbewegungs-Steuerkomponenten kombiniert ist, um ein günstiges Bewegungsverhalten des Ausschiebers 402 zu erhalten. Die Steuerkurve für den Ausschieber 402 ist mit 403 schematisch angedeutet. Die Bewegung des Ausschiebers 402 in der Draufsicht verdeutlicht die unterbrochene Linie 403a in Fig. 13.

Obwohl die Antriebseinrichtung für den Ausschieber 402 hier nicht im einzelnen dargestellt ist, wird vorzugsweise der Ausschieber über ein hydraulisch zwischen einer Arbeits- und einer Nicht-Arbeitsstellung schaltbares, vorzugsweise hydraulisch gesteuertes Kniegelenk angesteuert, so daß der Antrieb des Ausschiebers in Abhängigkeit von einer Beobachtung der Gruppenbildung der Bonbonstücke oder einer Qualitätsbeobachtung der Einzelverpackung der Bonbons 205 stillgesetzt werden kann. Aufgrund des kontinuierlichen Förderprinzips des Stapelbandförderers 3 würden solchermaßen als fehlerhaft oder unvollständig erkannte Gruppen von Bonbons ohne Betätigung des Ausschiebers 402 einfach nach hinten in Förderrichtung des Stapelbandes 301 (Pfeil X in Fig. 13) aus dem Stapelbandförderer 3 herausgeschoben, so daß auf einfache Weise durch die Nicht-Betätigung des Ausschiebers in Verbindung mit dem kontinuierlichen Stapelbandförderer 3 das Aussortieren fehlerhafte Produkte möglich ist, da diese Produkte einen anderen Förderweg nehmen (in Längsrichtung des Stapelbandförderers 3) als die ordnungsgemäßen Gegenstände und Gruppen A, B von Bonbons 205, die quer aus dem Stapelband 301 herausgeschoben werden.

Der Ausschieber 402 arbeitet auf einer Zwischenplatte 404, die entsprechend der Umlaufgeschwindigkeit des Stapelbandes 301 ebenfalls horizontal im Übergabebereich, d.h. im Arbeitsbereich des Ausschiebers 402 mit einer der Geschwindigkeit des Stapelbandes 301 entsprechenden Geschwindigkeit horizontal bewegt wird (die Rückzugsbewegung in die Ausgangslage erfolgt schneller). Eine Antriebsvorrichtung für die Zwischenplatte 404 ist in den schematischen Darstellungen nach Fig. 13 und 15 mit 405 bezeichnet.

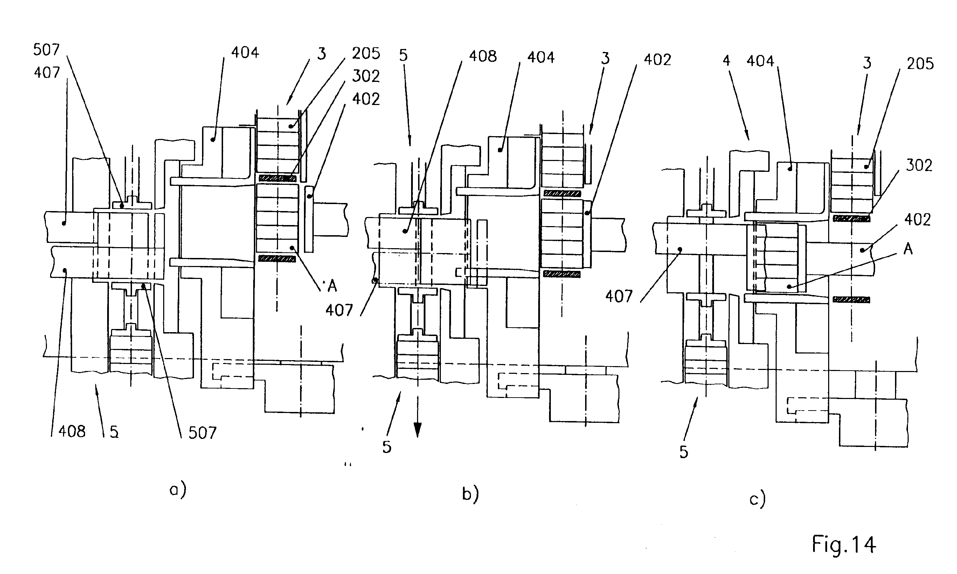

[0061 ] Mit der Zwischenplatte 404 arbeitet zum Übergeben der Gruppe Bonbons 205 gemeinsam auf das Zuführband 501 bzw. die Zuführkette 505 (Fig. 15) eine Querzugvorrichtung 406 zusammen, die zur definierten Übergabe jeder Gruppe A, B von Bonbons 205 einen Gegenhalter 407 und ein Greiferteil 408 aufweist, die durch einen gemeinsamen Antriebshebel 409 (s. Fig. 15) in ihrer Bewegung gesteuert werden und die miteinander, wie in Fig. 15 gezeigt ist, ein Transportfach 410 bilden, in dem sich die jeweilige Gruppe A, B auf der Zwischenplatte 404 befindet, um von dieser dann heruntergezogen und auf das Zuführband 501 oder die Zuführkette 505 gezogen zu werden, wie dies anhand der Fig. 14 und 15 noch erläutert wird.

Das Transportfach 410, das durch den Gegenhalter 407 in Verbindung mit dem Greiferteil 408 auf der Zwischenplatte 404 und stromab derselben gebildet wird, kann auch größer ausgelegt werden, so daß z.B. zwei Gruppen von Bonbons 205 aus dem Stapelbandförderer 3 hintereinander auf die Zwischenplatte 404 durch den Ausschieber 402 ausgeschoben werden und erst dann das Greiferteil 408 hinter die zuletzt ausgeschobene Gruppe greift und die beiden abfolgenden Gruppen dann gemeinsam auf das Zuführband 501 oder die Zuführkette 505 gefördert und mit diesem Zugmittel dann intermittierend schrittweise abgefördert werden.

Der Gegenhalter 407 führt im wesentlichen eine Horizontalbewegung zwischen dem Zuführband 501 bzw. der Zuführkette 505 (Fig. 15) und der Zwischenplatte 404 aus, gesteuert über den gemeinsamen, als Kurbelschwinge ausgeführten Antriebshebel 409, der fest mit einer hier nicht dargestellten Hohlwelle verbunden ist und über ein Drehgelenk 412 eine Gegenhalter-Schwinge 413 bewegt, wobei mit einem Steuerhebel 413a der Gegenhalter-Schwinge 413 ein Halter 414 verbunden ist, der seinerseits fest den Gegenhalter 407 lagert. Ferner ist der Antriebshebel 409 über ein Drehgelenk 420 bewegungsübertragend mit einem Halter 418 des Greiferteiles 408 verbunden, dem eine zusätzliche Greifhubewegung über einen Steuerhebel 419 und eine Steuerkoppel 416 verliehen wird.

Wie in Fig. 15 dargestellt ist, führt insbesondere ein vorderes Greifhakenende 408a des Greiferteiles 408 auf einer Rückkehrbewegung zu der Zwischenplatte 404 eine bogenförmige Bewegung zum Erfassen der nächsten, auf der Zwischenplatte 404 befindlichen Gruppe A aus, wobei diese Bewegungsbahn in Fig. 15 mit 415 bezeichnet ist und ebenfalls einerseits von dem Antriebshebel 409 (Grundbewegung), sowie andererseits von dem Steuerhebel 419, der fest mit einer Welle 411 verbunden ist und der Steuerkoppel 416 um eine Gelenkachse 417 erzeugt und auf den Halter 418 des Greiferteiles 408 übertragen wird. Die Zuführkette 505 zum intermittierenden Zufördern der Gruppen A, B zu einem (hier nicht dargestellten) Stangenpacker weist mit den einzelnen Kettengliedern in üblicher Weise verbundene Mitnehmer 506 auf, die mit Mitnehmerplatten die Transportfächer für die Gruppen A, B der Bonbons 205 auf der Zuführungskette 505 bilden, die in einem Gehäuse 509 aufgenommen ist, dessen Oberplatte 508 eine Transport-Gleitbahn für die Gruppen A, B bildet. Feste Seitenführungen für den Zuführungsförderer 5 sind in Fig. 13 mit 510 und 511 bezeichnet.

Um ein sicheres und zuverlässiges Querverschieben jeder Gruppe A, B durch den Ausstoßer 402 auf die Zwischenplatte 404 sicherzustellen, weist die Zwischenplatte 404 gegenüberliegende, mit einer Einführungsschräge versehene Führungsplatten 416 auf.

Figur 14 verdeutlicht in den Schritten a - c in schematischen Draufsichten jeweils einen Übergabevorgang von dem kontinuierlichen Stapelbandförderer 3 zu dem intermittierend weiterfördernden Kettenförderer 5, wobei in Fig. 14a (Ruhestellung) eine Gruppe A sich auf dem Stapelband 301 des Stapelbandförderers 3 zwischen zwei Mitnehmern 302 in der Stellung befindet, in der der Ausschieber 402 an der Gruppe A angreifen und die Gruppe auf die Zwischenplatte 404 übergeben kann. In dieser Position befindet sich zugleich eine bereits übergebene Gruppe B in dem Transportfach zwischen Gegenhalter 407 und Greiferteil 408 zwischen zwei Mitnehmerplatten 507 des Kettenförderers 5.

In Fig. 14b ist die Zuführkette 505 um einen Schritt weitergeführt worden und der Gegenhalter 407 und das Greiferteil 408 greifen durch einen Leertransportbereich zwischen zwei Mitnehmerplatten 507 hindurch in Richtung auf die Zwischenplatte 404. In Fig. 14c ist gezeigt, wie der Ausschieber 402 die Gruppe A auf die Zwischenplatte 404 und in das hier zunächst durch den Gegenhalter 407 gebildete Transportfach 410 einschiebt. Anschließend wird das Greiferteil 408 mit der Greifernase 408a in einer Hubgreifbewegung über die Gruppe A hinweggreifen und von der gegenüberliegenden Seite zusammen mit dem Gegenhalter 407 die Gruppe auf die Oberplatte 508 des die Zuführkette 505 aufweisenden Kettenförderers verschieben. Das Greiferteil 408 ist in Fig. 14c (da überdeckt von dem Gegenhalter 407) nicht dargestellt.

Für den Fall, daß fehlerhafte Artikel oder Gruppenbildungen erfaßt werden, wird der Ausschieber 402 nicht betätigt und dank der kontinuierlichen Förderung des Stapelbandförderers 3 laufen die fehlerhaften Produkte einfach in Förderrichtung des Stapelbandes 301 von dem Stapelbandförderer 3.

Durch die vorbeschriebene Lösung wird ein äußerst flexibles Handhabungs- und Verpackungssystem, insbesondere zum Stangenpacken von insbesonderen kleinstückigen Gegenständen wie Bonbons, Tabletten oder dgl. geschaffen, das hohe Arbeitsgeschwindigkeiten zuläßt, sich dabei durch Stabilität und Zuverlässigkeit auszeichnet und ohne Störungen des Hauptprozesses auch des Aussonderns fehlerhafter Produkte gestattet.

## Patentansprüche

1. Verfahren zur Weitergabe von Gegenständen (205), insbesondere für Verpackungsmaschinen, bei dem die Gegenstände einzeln zugeführt und in Gruppen (A,B) abgeführt werden, dadurch gekennzeichnet, daß jeder Gegenstand (205) einzeln zwischen gegenüberliegenden Haltebacken (104), die an einem rotierenden Träger (1) schwenkbar gelagert sind, aufgenommen wird, mit dem Träger (1) in Umfangsrichtung desselben transportiert wird und von diesem (1) einzeln im wesentlichen tangential an einen Stapelbandförderer (3) abgegeben wird, der zwischen einem Stapelband und einem Gegenhalter (304) gebildete Packfächer (305) umfaßt, wo die einzelnen Gegenstände (205) in den Packfächern des Stapelbandförderers benachbart angeordnet in Gruppen (A,B) gestapelt werden und anschließend gruppenweise durch den Stapelbandförderer (3) weiterbewegt und gruppenweise von diesem abgegeben werden.

2. Verfahren nach Anspruch 1, dadurch gekennzeichnet, daß die Haltebacken (104) eine Schwenkbewegung an dem Träger (1) um eine im wesentlichen parallel zur Drehachse (101) des Trägers (1) verlaufende Achse (103) ausführen.

3. Verfahren nach Anspruch 1 oder 2, dadurch gekennzeichnet, daß eine Umlaufgeschwindigkeit des Trägers (1) größer ist als eine Fördergeschwindigkeit eines Stapelbandes (301) des Stapelbandförderers (3).

4. Verfahren nach zumindest einem der vorhergehenden Ansprüche 1 bis 3, dadurch gekennzeichnet, daß jede Gruppe (A, B) von Gegenständen (205) aus dem Stapelbandförderer (3)durch eine im wesentlichen rechtwinklig zur Förderrichtung (X) des Stapelbandförderers (3) arbeitende Ausstoßvorrichtung (402) in einem Abgabebereich aus dem Stapelbandförderer (3) in einer Druckförderung abgegeben wird.

5. Verfahren nach zumindest einem der vorhergehenden Ansprüche 1 bis 4, dadurch gekennzeichnet, daß die Gruppen (A, B) von Gegenständen (205) auf eine im wesentlichen parallel zur Förderrichtung (X) des Stapelbandförderers (3) bewegbare Zwischenlagervorrichtung (404) abgegeben werden.

6. Verfahren nach Anspruch 5, dadurch gekennzeichnet, daß die Gruppen (A, B) von Gegenständen (205) gemeinsam durch eine Zugförderung von der Zwischenlagervorrichtung (404) auf ein, insbesondere intermittierend arbeitendes Zuführungsorgan (501, 505) einer Verarbeitungsmaschine, insbesondere Verpackungsmaschine, gefördert werden.

7. Verfahren nach zumindest einem der vorhergehenden Ansprüche 1 bis 6, dadurch gekennzeichnet, daß die Gegenstände (205) durch die Haltebacken (104) des rotierenden Trägers (1) von Packbacken (204) eines im wesentlichen mit der Umlaufgeschwindigkeit des Trägers (1) rotierenden Packkopfes (2) aufgenommen werden.

8. Verfahren nach Anspruch 7, dadurch gekennzeichnet, daß bei der Übergabe der Gegenstände (205) von den Packbacken (204) des Packkopfes (2) zu den Haltebacken (104) des Trägers (1) die Haltebacken (104) um 90° versetzt an dem Gegenstand (205) in bezug auf die Halterung der Gegenstände (205) durch die Packbacken (204) des Packkopfes (2) angreifen.

9. Verfahren nach zumindest einem der vorhergehenden Ansprüche 5 bis 8, dadurch gekennzeichnet, daß die Umlaufgeschwindigkeiten des Packkopfes (2) und des Trägers (1) im wesentlichen gleich sind, während die Fördergeschwindigkeit des Stapelbandförderers (3)höchstens die Hälfte der Umlaufgeschwindigkeit des Packkopfes (2) oder Trägers (1) beträgt.

10. Verfahren nach zumindest einem der vorhergehenden Ansprüche 1 bis 9, dadurch gekennzeichnet, daß zuminest eine Haltebacke (104a, 104b) jedes Haltebackenpaares (104) relativ zu der Drehachse (103) um eine Haltebackenachse (A) drehbar ist.

11. Vorrichtung zur Weitergabe von Gegenständen, insbesondere für Verpackungsmaschinen, mit Haltebackenpaaren, die an einem rotierenden Träger (1) schwenkbar gelagert sind, zur einzelnen Erfassung eines einzelnen Gegenstandes (205) zwischen den Haltebacken (104) eines Haltebackenpaares in einem Aufnahmebereich des Trägers, der Bewegung des Gegenstandes mit dem Träger in Umfangsrichtung desselben und Abgabe des Gegenstandes in einem Abgabebereich des Trägers, gekennzeichnet durch einen stromab des Trägers (1) angeordneten Stapelbandförderer (3) mit Packfächern (305) zur gruppenweisen Aufnahme der einzeln durch die Haltebackenpaare (104) des Trägers (1) zugeführten Gegenstände (205) in gestapelter Anordnung nebeneinander, wobei die Packfächer (305) zwischen einem umlaufenden Stapelband (301) und einem Gegenlager (304) gebildet werden.

12. Vorrichtung nach Anspruch 11, dadurch gekennzeichnet, daß das Stapelband (301) des Stapelbandförderers (3) eine Mehrzahl von Mitnehmern (302) zur Bildung der Packfächer (305) aufweist, mit einem stationär gegenüberliegend zwischen einem Aufnahmeabschnitt des Stapelbandförderers (3) und einem Abgabeabschnitt desselben angeordneten Gegenlager (304).

13. Vorrichtung nach Anspruch 12, dadurch gekennzeichnet, daß die Bildung der Packfächer (305) im wesentlichen tangential zu einem Bewegungsweg der Haltebackenpaare (104) erfolgt.

14. Vorrichtung nach zumindest einem der vorhergehenden Ansprüche 11 bis 13, dadurch gekennzeichnet, daß die Haltebackenpaare (104) bewegliche Haltebacken (104a, 104b) aufweisen, zwischen denen der Gegenstand (205) aufgenommen ist.

15. Vorrichtung nach Anspruch 14, dadurch gekennzeichnet, daß die Haltebacken (104a, 104b)separat von den zugehörigen Lagermitteln, insbesondere einem Schwenkgehäuse (117) beweglich, insbesondere gegenüber diesen verschwenkbar sind.

16. Vorrichtung nach zumindest einem der vorhergehenden Ansprüche 11 bis 15, dadurch gekennzeichnet, daß in einem Abgabebereich des Stapelbandförderers (3) eine Ausstoßvorrichtung (402) zum Ausschieben der gruppenweise geförderten Gegenstände (205) aus den Packfächern (305) des Stapelbandförderers (3) vorgesehen ist.

17. Vorrichtung nach Anspruch 16, dadurch gekennzeichnet, daß in Verbindung mit der Ausstoßvorrichtung (402) eine im wesentlichen parallel zur Förderrichtung (X) des Stapelbandes (301) im Ausgabebereich des Stapelbandförderers (3) bewegbare Zwischenplatte (404) vorgesehen ist.

18. Vorrichtung nach Anspruch 17, dadurch gekennzeichnet, daß stromab der Zwischenplatte (404) ein Zuführzugmittel (501, 505) zur gruppenweisen Zuführung der Gegenstände (205) zu einer Verpakkungsmaschine vorgesehen und zwischen Zwischenplatte (404) und Zufühzugmittel (501, 505) eine Übergabevorrichtung (4) angeordnet ist.

19. Vorrichtung nach zumindest einem der vorhergehenden Ansprüche 11 bis 18, dadurch gekennzeichnet, daß der rotierende Träger ein Übergabekopf (1) ist, der ein um eine stationäre Achse (101) rotierendes Gehäuse (102), an dem schwenkbar die Mehrzahl von Haltebackenpaaren (104) aufgenommen sind, aufweist, wobei eine Bewegungssteuerung der Haltebackenpaare (104) durch eine stationäre, gemeinsam mit der Achse (101) verdrehbare Kurvenscheibenanordnung (109) erfolgt.

20. Vorrichtung nach Anspruch 19, dadurch gekennzeichnet, daß der Übergabekopf (1)zwischen einem rotierenden Packkopf (2) mit einer der Anzahl der Haltebackenpaare (104) an dem Übergabekopf (1) entsprechenden Anzahl von Packbakken (204) und dem Stapelbandförderer (3) angeordnet ist.

21. Vorrichtung nach Anspruch 20, dadurch gekennzeichnet, daß die Umlaufgeschwindigkeiten von Packkopf (2) und Übergabekopf (1) im wesentlichen gleich sind.

22. Vorrichtung nach zumindest einem der vorhergehenden Ansprüche 19 bis 21, dadurch gekennzeichnet, daß der Packkopf (2) Teil einer die Gegenstände (205) einzeln verpackenden Verpakkungsmaschine ist, deren Antriebseinrichtung gleichzeitig die Antriebseinrichtung für den Übergabekopf (1) und den Stapelbandförderer (3) ist.

23. Vorrichtung nach zumindest einem der vorhergehenden Ansprüche 19 bis 22, dadurch gekennzeichnet, daß die Förderung der Gegenstände (205) durch den Übergabekopf (1) über einen Umfangswinkel von ca. 180° zwischen dem Packkopf (2) und dem Stapelbandförderer (3) erfolgt.

24. Vorrichtung nach zumindest einem der vorhergehenden Ansprüche 19 bis 23, dadurch gekennzeichnet, daß die Haltebacken (104) des Übergabekopfes (1) im wesentlichen rechtwinklig zu paarweise an dem Packkopf (2) gelagerten Packbacken (204) angeordnet sind.

25. Vorrichtung nach Anspruch 18, dadurch gekennzeichnet, daß die Übergabevorrichtung (4) eine Querschubvorrichtung (401) zum Ausstoßen einer Gruppe (A, B) von Gegenständen (205) aus einem Packfach (305) des Stapelbandförderers (3) im wesentlichen quer zu einer Förderrichtung (X) des Stapelbandförderers (3) auf eine Zwischenlagervorrichtung (404) und eine Querzugvorrichtung (406) zum Aufnehmen der Gruppe (A, B) von Gegenständen von der Zwischenlagervorrichtung (404) zu einer Weiterfördereinrichtung (5) aufweist.

## Claims

1. Method for the onward transmission of articles (205), in particular for packaging machines, in which the articles are supplied individually and removed in groups (A, B), characterised in that each article (205) is individually received between holding jaws (104), which each lie opposite the other and are borne at a rotating carrier (1) to be pivotable, is transported by the carrier (1) in the circumferential direction thereof and delivered by this (1) individually and substantially tangentially to a stacking belt conveyor (3), which comprises packing compartments (305), which are formed between a stacking belt and a counterholder (304) and where the individual articles (205) are stacked in groups (A, B) arranged to be neighbouring in the packing compartments of the stacking belt conveyor and subsequently moved onward in groups by the stacking belt conveyor (3) and delivered in groups by this.

2. Method according to claim 1, characterised in that the holding jaws (104) execute a pivotal movement at the carrier (1) about an axis (103) extending substantially parallelly to the rotational axis (101) of the carrier (1).

3. Method according to claim 1 or 2, characterised in that a rotational speed of the carrier (1) is greater than a conveying speed of a stacking belt (301) of the stacking belt conveyor (3).

4. Method according to at least one of the preceding claims 1 to 3, characterised in that each group (A, B) of articles (205) is delivered out of the stacking belt conveyor (3) in a pressure feed in a delivery region of the stacking belt conveyor (3) by an ejector device (402) operating substantially at right angles to the conveying direction (X) of the stacking belt conveyor (3).

5. Method according to at least one of the preceding claims 1 to 4, characterised in that the groups (A, B) of articles (205) are delivered onto an intermediate storage device (404), which is movable substantially parallelly to the conveying direction (X) of the stacking belt conveyor (3).

6. Method according to claim 5, characterised in that the groups (A, B) of articles (205) are conveyed in common by a traction conveying from the intermediate storage device (404) onto a feed organ (501, 505), in particular as intermittently operating one, of a processing machine, in particular a packaging machine.

7. Method according to at least one of the preceding claims 1 to 6, characterised in that the articles (205) are received by the holding jaws (104) of the rotating carrier (1) of packing jaws (204) of a packing head (2) rotating substantially at the rotational speed of the carrier (1).

8. Method according to claim 7, characterised in that during the transfer of the articles (205) from the packing jaws (204) of the packing head (2) to the holding jaws (104) of the carrier (1), the holding jaws (104) engage at the article (205) while being displaced through 90° relative to the holding of the articles (205) by the packing jaws (204) of the packing head (2).

9. Method according to at least one of the preceding claims 5 to 8, characterised in that the rotational speeds of the packing head (2) and of the carrier (1) are substantially the same, whilst the conveying speed of the stacking belt conveyor (3) amounts to at most half the rotational speed of the packing head (2) or of the carrier (1).

10. Method according to at least one of the preceding claims 1 to 9, characterised in that at least one holding jaw (104a, 104b) of each holding jaw pair (104) is rotatable about a holding jaw axis (A) relative to the rotational axis (103).

11. Device for the onward transmission of articles, in particular for packaging machines, with holding jaw pairs which are borne to be pivotable at a rotating carrier (1), for the individual seizing of a single article (205) between the holding jaws (104) of a holding jaw pair in a receiving region of the carrier, the movement of the article with the carrier in the circumferential direction thereof and for the delivery of the article in a delivery region of the carrier, characterised by a stacking belt conveyor (3), which is arranged downstream of the carrier (1), with packing compartments (305) for the reception of groups of the articles (205), which are advanced individually by the holding jaw pairs (104) of the carrier (1), in stacked arrangement one beside the other, wherein the packing compartments (305) are formed between a circulating stacking belt (301) and a counterbearing (304).

12. Device according to claim 11, characterised in that the stacking belt (301) of the stacking belt conveyor (3) comprises a plurality of entraining members (302) for the formation of the packing compartments (305), with a counterbearing (304) arranged to lie stationarily opposite between a receiving portion of the stacking belt conveyor (3) and a delivery portion thereof.

13. Device according to claim 12, characterised in that the formation of the packing compartments (305) takes place substantially tangentially to a movement path of the holding jaw pairs (104).

14. Device according to at least one of the preceding claims 11 to 13, characterised in that the holding jaw pairs (104) comprise movable holding jaws (104a, 104b), between which the article (205) is received.

15. Device according to claim 14, characterised in that the holding jaws (104a, 104b) are movable separately from the associated bearing means, in particular a pivot housing (117), in particular are pivotable relative thereto.

16. Device according to at least one of the preceding claims 11 to 15, characterised in that an ejector device (402) for pushing the articles (205), which are conveyed in groups, out of the packing compartments (305) of the stacking belt conveyor (3), is provided in a delivery region of the stacking belt conveyor(3).

17. Device according to claim 16, characterised in that an intermediate plate (404), which is movable in the delivery region of the stacking belt conveyor (3) substantially parallelly to the conveying direction (X) of the stacking belt conveyor (3), is provided in conjunction with the ejector device (402).

18. Device according to claim 17, characterised in that a feed traction means (501, 505) for the feeding of groups of the articles (205) to a packaging machine is provided downstream of the intermediate plate (404) and a transfer device (4) is arranged between the intermediate plate (404) and the feed traction means (501, 505).

19. Device according to at least one of the preceding claims 11 to 18, characterised in that the rotating carrier is a transfer head (1), which comprises a housing (102), which rotates about a stationary axle (101) and at which the plurality of holding jaw pairs (104) are received to be pivotable, wherein a movement control of the holding jaw pairs (104) takes place by a stationary cam disc arrangement (109), which is rotatable together with the axle (101).

20. Device according to claim 19, characterised in that the transfer head (1) is arranged between the stacking belt conveyor (3) and a rotating packing head (2) with a number of packing jaws (204) corresponding with the number of holding jaw pairs (104) at the transfer head (1).

21. Device according to claim 20, characterised in that the rotational speeds of the packing head (2) and of the transfer head (1) are substantially equal.

22. Device according to at least one of the preceding claims 19 to 21, characterised in that the packing head (2) is part of a packaging machine, which packages the articles (205) individually and the drive equipment of which is at the same time the drive equipment for the transfer head (1) and the stacking belt conveyor (3).

23. Device according to at least one of the preceding claims 19 to 22, characterised in that the conveying of the articles (205) by the transfer head (1) takes place over a circumferential angle of about 180° between the packing head (2) and the stacking belt conveyor (3).

24. Device according to at least one of the preceding claims 19 to 23, characterised in that the holding jaws (104) of the transfer head (1) are arranged substantially at right angles to packing jaws (204) borne in pairs at the packing head (2).

25. Device according to claim 18, characterised in that the transfer device (4) comprises a transverse thrust device (401) for the ejection of a group (A, B) of articles (205) out of a packing compartment (305) of the stacking belt conveyor (3) and substantially transversely to a conveying direction (X) of the stacking belt conveyor (3) onto an intermediate storage device (404) and a transverse traction device (406) for receiving the groups (A, B) of arti- des from the intermediate storage device (404) to an onward conveying equipment (5).

## Revendications

1. Procédé de transfert d'objets (205), en particulier pour des machines d'emballage, dans lequel les objets sont amenés individuellement et emmenés en groupes (A, B), caractérisé en ce que chaque objet (205) est reçu individuellement entre des mâchoires de retenue (104) opposées, qui sont logées de façon pivotante sur un support rotatif (1), est transporté avec le support (1) dans le sens circonférentiel de celui-ci et est délivré de celui-ci (1) individuellement de façon essentiellement tangentielle à un transporteur à bande d'empilage (3), qui comprend des compartiments d'emballage (305) formés entre une bande d'empilage et une contre- bouterolle (304), les objets individuels (205) étant disposés de façon adjacente dans les compartiments d'emballage du transporteur à bande d'empilage, empilés en groupes (A, B) et ensuite déplacés plus loin en groupes par le transporteur à bande d'empilage (3) et délivrés de façon groupée de celui-ci.

2. Procédé selon la revendication 1, caractérisé en ce que les mâchoires de retenue (104) réalisent un mouvement pivotant sur le support (1) autour d'un axe (103) passant essentiellement parallèlement à l'axe de rotation (101) du support (1).

3. Procédé selon la revendication 1 ou 2, caractérisé en ce qu'une vitesse de rotation du support (1) est supérieure à une vitesse de transport d'une bande d'empilage (301) du transporteur à bande d'empilage (3).

4. Procédé selon l'une au moins des revendications précédentes 1 à 3, caractérisé en ce que chaque groupe (A, B) d'objets (205) est délivré dans un mouvement de pression du transporteur à bande d'empilage (3) par un dispositif expulseur (402) travaillant de façon essentiellement orthogonale au sens de transport (X) du transporteur à bande d'empilage (3) dans une zone de décharge du transporteur à bande d'empilage (3).

5. Procédé selon l'une au moins des revendications précédentes 1 à 4, caractérisé en ce que les groupes (A, B) d'objets (205) sont délivrés sur un dispositif formant palier intermédiaire (404) mobile essentiellement parallèlement au sens de transport (X) du transporteur à bande d'empilage (3).

6. Procédé selon la revendication 5, caractérisé en ce que les groupes (A, B) d'objets (205) sont transportés ensemble par une traction du dispositif formant palier intermédiaire (404) sur un organe d'alimentation (501, 505) travaillant notamment de façon discontinue d'une machine de transformation, en particulier d'une machine d'emballage.

7. Procédé selon l'une au moins des revendications précédentes 1 à 6, caractérisé en ce que les objets (205) sont reçus par les mâchoires de retenue (104) du support rotatif (1) des mâchoires d'emballage (204) d'une tête d'emballage (2) tournant essentiellement à la vitesse de rotation du support (1

8. Procédé selon la revendication 7, caractérisé en ce que lors du transfert des objets (205) des mâchoires d'emballage (204) de la tête d'emballage (2) aux mâchoires de retenue (104) du support (1 les mâchoires de retenue (104) mordent sur l'objet (205) en étant décalées de 90° par rapport au serrage des objets (205) par les mâchoires d'emballage (204) de la tête d'emballage (2).

9. Procédé selon l'une au moins des revendications précédentes 5 à 8, caractérisé en ce que les vitesses de rotation de la tête d'emballage (2) et du support (1) sont essentiellement équivalentes, alors que la vitesse de transport du transporteur à bande d'empilage (3) est au maximum la moitié de la vitesse de rotation de la tête d'emballage (2) ou du support (1).

10. Procédé selon l'une au moins des revendications précédentes 1 à 9, caractérisé en ce qu'au moins une mâchoire de retenue (104a, 104b) de chaque paire de mâchoires de retenue (104) peut pivoter relativement à l'axe de rotation (103) autour d'un axe des mâchoires de retenue (A).

11. Dispositif de transfert d'objets, notamment pour des machines d'emballage, comprenant des paires de mâchoires de retenue, qui sont logées de façon pivotante sur un support rotatif (1), destiné à la saisie individuelle d'un objet individuel (205) entre les mâchoires de retenue (104) d'une paire de mâchoires de retenue dans une zone de réception du support, pour le mouvement de l'objet avec le support dans le sens circonférentiel de celui-ci et délivrance de l'objet dans une zone de décharge du support, caractérisé par un transporteur à bande d'empilage (3), disposé en aval du support (1), avec des compartiments d'emballage (305) pour la réception en groupes des objets (205) amenés individuellement par les paires de mâchoires de retenue (104) du support (1) dans une disposition empilée les uns à côté des autres, les compartiments d'emballage (305) étant formés entre une bande d'empilage (301) tournante et une butée (304).

12. Dispositif selon la revendication 11, caractérisé en ce que la bande d'empilage (301) du transporteur à bande d'empilage (3) présente une pluralité de tocs d'entraînement (302) pour former des compartiments d'emballage (305), avec une butée (304) disposée de façon fixe à l'opposé entre une section de réception du transporteur à bande d'empilage (3) et une section de décharge de celui-ci.

13. Dispositif selon la revendication 12, caractérisé en ce que la formation des compartiments d'emballage (305) se fait essentiellement de façon tangentielle à une trajectoire de déplacement des paires de mâchoires de retenue (104).

14. Dispositif selon l'une au moins des revendications précédentes 11 à 13, caractérisé en ce que les paires de mâchoires de retenue (104) présentent des mâchoires de retenue mobiles (104a, 104b), entre lesquelles est reçu l'objet (205).

15. Dispositif selon la revendication 14, caractérisé en ce que les mâchoires de retenue (104a, 104b) peuvent pivoter séparément des moyens de stockage associés, notamment de façon mobile par rapport à un boîtier pivotant (117), en particulier en face de celui-ci.

16. Dispositif selon l'une au moins des revendications précédentes 11 à 15, caractérisé en ce que dans une zone de décharge du transporteur à bande d'empilage (3) un dispositif expulseur (402) est prévu pour pousser des objets transportés de façon groupée (205) à l'extérieur des compartiments d'emballage (305) du transporteur à bande d'empilage (3).

17. Dispositif selon la revendication 16, caractérisé en ce que, en lien avec le dispositif expulseur (402), est prévue une plaque intermédiaire (404) pouvant se mouvoir de façon essentiellement parallèle au sens de transport (X) de la bande d'empilage (301) dans la zone de décharge du transporteur à bande d'empilage (3).

18. Dispositif selon la revendication 17, caractérisé en ce que, en aval de la plaque intermédiaire (404), est prévu un mécanisme de traction d'alimentation (501, 505) pour l'alimentation en groupes des objets (205) vers une machine d'emballage et un dispositif de transfert (4) est disposé entre la plaque intermédiaire (404) et le mécanisme de traction d'alimentation (501, 505).

19. Dispositif selon l'une au moins des revendications précédentes 11 à 18, caractérisé en ce que le support rotatif est une tête de transfert (1), qui présente un boîtier rotatif (102) autour d'un axe fixe (101), sur lequel sont logées de façon pivotante la pluralité de paires de mâchoires de retenue (104), une commande du mouvement des paires de mâchoires de retenue (104) ayant lieu grâce à un dispositif à came fixe (109), pouvant être mis en torsion en commun avec l'axe (101).

20. Dispositif selon la revendication 19, caractérisé en ce que la tête de transfert (1) est disposée entre une tête d'emballage rotative (2), comprenant un nombre de mâchoires d'emballage (204) correspondant au nombre de paires de mâchoires de retenue (104) se trouvant sur la tête de transfert (1), et le transporteur à bande d'empilage (3).

21. Dispositif selon la revendication 20, caractérisé en ce que les vitesses de rotation de la tête d'emballage (2) et de la tête de transfert (1) sont essentiellement équivalentes.

22. Dispositif selon l'une au moins des revendications précédentes 19 à 21, caractérisé en ce que la tête d'emballage (2) est une partie d'une machine d'emballage emballant individuellement les objets (205), dont le dispositif d'entraînement est simultanément le dispositif d'entraînement pour la tête de transfert (1) et le transporteur à bande d'empilage (3).

23. Dispositif selon l'une au moins des revendications précédentes 19 à 22, caractérisé en ce que le transport des objets (205) se fait grâce à la tête de transfert (1) sur un angle périphérique de 180° environ entre la tête d'emballage (2) et le transporteur à bande d'empilage (3).

24. Dispositif selon l'une au moins des revendications précédentes 19 à 23, caractérisé en ce que les mâchoires de retenue (104) de la tête de transfert (1) sont disposées de façon essentiellement orthogonale à des mâchoires d'emballage (204) logées par paires sur la tête d'emballage (2).

25. Dispositif selon la revendication 18, caractérisé en ce que le dispositif de transfert (4) présente un dispositif de poussée transversale (401) destiné à expulser un groupe (A, B) d'objets (205) d'un compartiment d'emballage (305) du transporteur à bande d'empilage (3) essentiellement transversalement à un sens de transport (X) du transporteur à bande d'empilage (3) sur un dispositif formant palier intermédiaire (404) et un dispositif de traction transversale (406) pour la réception du groupe (A, B) d'objets du dispositif formant palier intermédiaire (404) à un dispositif de transport ultérieur (5).
